(19) Europäisches Patentamt
European Patent Office
Office européen des brevets

(11) Veröffentlichungsnummer: **0 264 529**
**B1**

(12) **EUROPÄISCHE PATENTSCHRIFT**

(45) Veröffentlichungstag der Patentschrift: **27.06.90**

(51) Int. Cl.⁵: **F 42 B 10/64,** B 64 C 23/08

(21) Anmeldenummer: **87105349.2**

(22) Anmeldetag: **10.04.87**

(54) **Flugkörper mit Stabilisierungseinrichtung.**

(30) Priorität: **19.08.86 DE 3628129**

(43) Veröffentlichungstag der Anmeldung:
**27.04.88 Patentblatt 88/17**

(45) Bekanntmachung des Hinweises auf die
Patenterteilung:
**27.06.90 Patentblatt 90/26**

(84) Benannte Vertragsstaaten:
**BE CH DE ES FR GB IT LI NL SE**

(56) Entgegenhaltungen:
FR-A- 723 542
GB-A- 424 140
GB-A-1 036 033
US-A-1 927 538
US-A-2 065 254
US-A-3 140 065
US-A-3 305 194
US-A-3 568 961

(73) Patentinhaber: **Rheinmetall GmbH
Ulmenstrasse 125 Postfach 6609
D-4000 Düsseldorf (DE)**

(72) Erfinder: **Peller, Helmut, Dr.
Sulzbachstrasse 43
D-4000 Düsseldorf 12 (DE)**
Erfinder: **Schilling, Hartmut, Dr.
Lichtenvoorder Strasse 22
D-4044 Kaarst 2 (DE)**
Erfinder: **Becker, Hanjörg
Fasanenweg 25
D-4000 Düsseldorf 30 (DE)**
Erfinder: **Glotz, Gerhard, Dr.
Yorckstrasse 49
D-3100 Celle (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Stabilisierungseinrichtung für einen Flugkörper nach den im Oberbegriff des Patentanspruchs 1 angegebenen Merkmalen.

Aus der US-PS 3,188,957 ist ein Flugkörper bekannt, der heckseitig ein ausstellbares Flügelrad aufweist, das so gestaltet ist, daß es vor dem Ausstellen innerhalb des Kalibers liegt. Hierdurch soll eine verbesserte Aerodynamik und Kräfteverteilung erreicht werden.

Nachteilig bei der bekannten Anordnung ist es, daß die Stabilisierungeinrichtung nach dem Ausstellen weitestgehend statisch ist, d. h., daß die Seitenkräfte zur Lenkung des Flugkörpers und ggf. zur Dralleinstellung nur minimal sind.

Eine gleiche Bewertung ergibt sich auch bezüglich des aus der DE—OS 20 18 881 bekannten drallstabilisierten Geschosses, das mit axial durchströmten Schaufeln ausgebildet ist. Auch wenn diese beweglich und/oder elastisch angeordnet sein können, so bietet eine Schaufel nur durch Veränderung ihres Anstellwinkels die Möglichkeit der Beeinflussung von Seitenkräften innerhalb bestimmter Grenzen.

Aus der Druckschrift US—A 3,140,065 sind Stabilisierungseinrichtungen nach den im Oberbegriff des Patentanspruchs 1 angegebenen Merkmalen bekannt, die zur Lenkung von Flugzeugen an den Flugzeugtragflächen angeordnet sind und jeweils einen rotierenden Zylinder enthalten. Dadurch, daß die rotierenden Zylinder jeweils nur gegenüberliegend an den Flugzeugtragflächen angeordnet sind, bleibt jedoch die Einstellung der Seitenkräfte, beispielsweise zur Lenkung des Flugzeuges nur auf diese Tragflächenebene beschränkt.

Demgegenüber liegt der Erfindung die Aufgabe zugrunde, eine für Geschosse geeignete Stabilisierungseinrichtung bereitzustellen, die große, beliebig einstellbare Seitenkräfte zur Lenkung und Dralleinstellung erzeugen kann.

Gelöst wird diese Aufgabe durch die im kennzeichnenden Teil des Patentanspruchs 1 angegebenen Merkmale.

Vorteilhafte Ausgestaltungen der Erfindung gehen aus den Unteransprüchen hervor.

Die Erfindung steht unter der Erkenntnis, daß durch den Einsatz beweglicher, und insbesondere drehbeweglicher Bauteile die Stabilisierungsmöglichkeiten eines Geschosses erheblich erhöht werden können. Während durch Schaufeln, Flügel oder dergleichen nur eine Einstellbarkeit innerhalb bestimmter, konstruktiv vorgegebener Grenzen möglich ist, kann durch rotierende Elemente, die vorzugsweise überdies auch in ihrer Länge oder Ausrichtung einstellbar sind, praktisch jede beliebige Reaktionskraft eingestellt werden. Die Erfindung schlägt dementsprechend eine Stabilisierungseinrichtung vor, die vorzugsweise vier um ihre jeweilige Achse drehbare Zylinder umfaßt. Der Begriff "Zylinder" ist dabei nicht auf runde oder rotationssymmetrische Zylinder beschränkt, sondern als "Zylinder" werden erfindungsgemäß sämtliche stab- oder kegelförmige Bauelemente verstanden.

Bevorzugt werden aufgrund vereinfachter strömungsmechanischer Berechnungen rotationssymmetrische Zylinder, die jedoch als solche wieder unterschiedliche geometrische Formen aufweisen können, wie nachstehend noch näher ausgeführt wird.

Derartige Zylinder, die vorzugsweise in und aus dem Kaliber eines Geschosses verstellbar angeordnet sind, ermöglichen es, durch Vorgabe ihrer geometrischen Form, Länge (Ausfahrweg) und insbesondere ihrer Rotationsgeschwindigkeit nahezu beliebige Seitenkräfte aufzubringen.

Die entsprechenden Variationsmöglichkeiten werden weiter erheblich vergrößert, wenn diese Zylinder vorzugsweise in gleichem Abstand und mit ihren Mittenachsen auf einer radialen (gedachten) Geschoßfläche auf dem Geschoßumfang verteilt angeordnet sind.

Die Zylinder können vorzugsweise völlig unterschiedlich gestaltet sein.

Sie können sich zum Beispiel in ihrer Oberflächenprofilierung unterscheiden. So kann ein Zylinder z. B. mit einer längs- oder quergekerbten Oberfläche ausgebildet sein, während ein anderer auf seiner Oberfläche flügelradartig ausgebildet ist; ebenso sind gewölbte oder eingeschnürte Oberflächengestaltungen denkbar. Bezüglich der Profilierung der Oberfläche im einzelnen gibt die Erfindung keine Grenzen vor.

Durch unterschiedliche Durchmesser und Ausstellwege ist eine weitere Variationsmöglichkeit der Einstellung der Seitenkräfte zur Lenkung des Geschosses und Dralleinstellung gegeben.

Vorzugsweise werden vier einzelne gleichmäßig über dem Umfang des Geschosses verteilt angeordnete Kreiszylinder über eine im Geschoß angeordnete Steuereinheit gesteuert. Diese kann bei entsprechender Programmierung dann zum Beispiel dafür sorgen, daß einer der vier Zylinder innerhalb des Kalibers verbleibt, während die anderen drei, z. B. mit jeweils unterschiedlicher Profilierung, in unterschiedlichen Längen ausgefahren werden und mit unterschiedlichen Rotationsgeschwindigkeiten sich anschließend drehen.

Bezüglich der Anordnung können die einzelnen Zylinder sowohl klappbar als auch teleskopartig verfahrbar sowie schwenkbar am Geschoßumfang angeordnet sein.

Bei einer in das Kaliber des Geschosses verschwenkbaren Anordnung ist es auch möglich, die Zylinder in einem Winkelbereich zwischen 0 und 90° zur Mittenlängsachse des Geschosses auszurichten, wodurch sich weitere Einstellungsmöglichkeiten ergeben.

Die erfindungsgemäß vorgeschlagene Stabilisierungseinrichtung ermöglicht es darüberhinaus, Geschosse nahezu beliebiger Länge und damit größerer Querschnittsbelastung, Reichweite und Durchschlagskraft herzustellen. Die erfindungsgemäße Anordnung ist kaliberunabhängig.

Wegen der relativ kleinen, über das Kaliber hinausragenden Flächen entsteht ein geringes Rolldämpfungsmoment bei gleichzeitiger Erzeugung sehr hoher Seitenkräfte. Die Seitenkräfte sind darüberhinaus - wie beschrieben - äußerst fein steuerbar.

Die Stabilisierungseinrichtung ist in Bezug auf die Größe des Gesamtgeschosses sehr klein. Im Gegensatz zur Verwendung von Stabilisierungsflügeln ist die erzeugte Seitenkraft nahezu unbegrenzt, da es nicht zu einer Strömungsablösung (bei hohen Anstellwinkeln) kommen kann. Im Vergleich zu impulsgesteuerten Stabilisierungseinrichtungen entfallen stoßartige Belastungen, die sich negativ auf die Regelschleife (den Suchkopf) auswirken können.

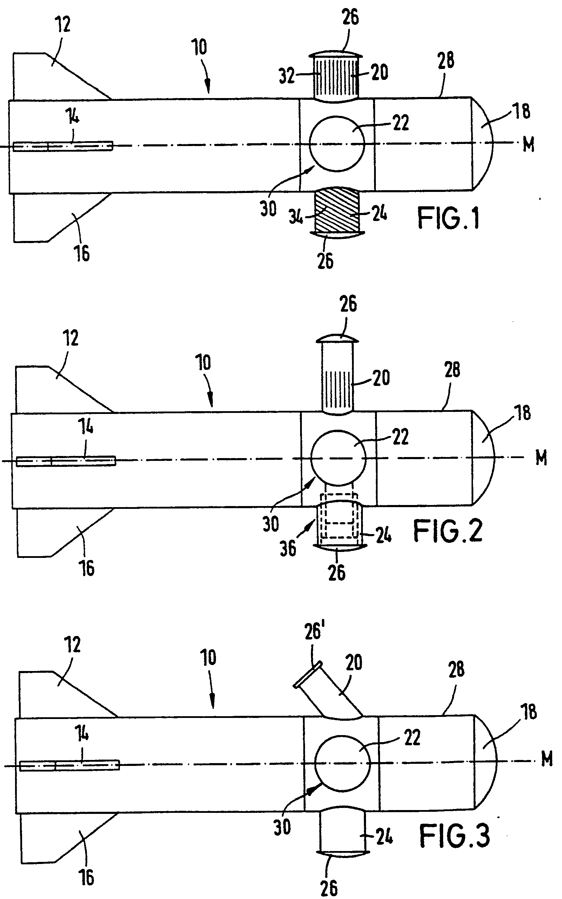

Die Erfindung wird nachstehend anhand der Zeichnung näher erläutert. Diese zeigt in schematischer Darstellung in den Figuren 1 bis 3 verschiedene Ausführungsformen eines erfindungsgemäßen Flugkörpers jeweils in Seitenansicht.

Mit dem Bezugszeichen 10 ist das Geschoß insgesamt dargestellt. Es weist beim Ausführungsbeispiel nach Figur 1 an seinem rückwärtigen Ende vier, symmetrisch auf der Umfangsfläche verteilte ausstellbare Flügel 12, 14, 16, sogenannte Wickelflügel, zur Stabilisierung auf (in der Zeichnung sind nur drei der vier Flügel erkennbar).

Im vorderen Teil des Geschosses und im Abstand vor dem Suchkopf 18 sind in gleicher Weise wie die Flügel 12, 14, 16 vier Kreiszylinder in radialer Ausrichtung zur Mittenlängsachse M des Geschosses 10 angeordnet, von denen drei Zylinder mit den Bezugsziffern 20, 22, 24 dargestellt sind.

Jeder Zylinder ist teleskopartig aus dem Inneren des Geschosses 10 heraus verfahrbar wie dies beim Zylinder 24 in Figur 2 schematisch dargestellt ist und weist an seinem freien Ende eine, den Zylinderquerschnitt überragende Scheibe 26 auf, die entsprechend der Krümmung der Oberfläche des Geschosses 10 gewölbt ausgebildet ist.

In völlig zurückgezogener Position fluchten die Scheiben 26 mit der Oberfläche 28 des Geschosses 10.

Die Verfahrbarkeit der Zylinder 20, 22, 24 wird durch mit einer Steuereinrichtung versehene Antriebs- und Stellmotoren 30 im Inneren des Geschosses 10 ausgeführt. Die Motoren sorgen auch für die Rotationsbeweglichkeit der Zylinder 20, 22, 24, wobei jeder der vier Zylinder individuell einstellbar ist.

Die Oberflächen der Zylinder 20, 22, 24 sind unterschiedlich strukturiert. Während der Zylinder 20 mit einem eingeschnürten Mittelbereich ausgebildet ist, weist der Kreiszylinder 20 parallel zu seiner Mittenlängsachse verlaufende Oberflächenrillen 32 auf und der Zylinder 24 ist ähnlich einer Schneckenwelle mit schräg verlaufenden Vertiefungen 34 ausgebildet.

Die in Figur 2 dargestellte Ausführungsform unterscheidet sich von der gemäß Figur 1 dadurch, daß der nach oben herausragende Zylinder 2D gegenüber den Zylindern 22, 24 einen geringeren Durchmesser aufweist und nur in seinem unteren Abschnitt mit axial verlaufenden Oberflächenrillen ausgebildet ist. Der Zylinder 20 ist dabei in gleicher Weise teleskopartig in das Geschoß 10 verfahrbar, wie der Zylinder 24 über die Teleskopeinrichtung 36.

Beim Ausführungsbeispiel gemäß Figur 3 ist der obere Zylinder 20 nicht mehr teleskopartig aus dem Geschoß 10 verfahrbar, sondern in einem Winkel zwischen 0 und 90° zur Mittenlängsachse M klappbar angeordnet, das heißt, er wird von einer Stellung gemäß Figur 1 oder 2 in Richtung auf das Heck in das Geschoß 10 weggeklappt. In Figur 3 ist eine Zwischenstellung mit einem Winkel von etwa 50° gegenüber der Horizontalen, in der der Flügel 14 liegt, dargestellt.

Der Zylinder 20 unterscheidet sich weiter durch eine zylinderförmige obere Abdeckscheibe 26 von den zuvor beschriebenen Ausführungsformen mit einer gewölbten Abdeckung 26.

## Patentansprüche

1. Stabilisierungseinrichtung für einen Flugkörper (10), bestehend aus mehreren jeweils um eine Achse drehbaren und in ihrer Lage verstellbaren Zylindern (20, 22, 24),
dadurch gekennzeichnet, daß vier drehbare Zylinder (20, 22, 24) in gleichem Abstand zueinander über dem Umfang eines Geschosses (10) verteilt und mit ihren Mittenachsen auf einer radialen gedachten Geschoßfläche in und aus dem Kaliber des Geschosses (10) von einer im Geschoß (10) angeordneten Steuereinheit (30) einzeln einstellbar angeordnet sind und untereinander eine unterschiedliche Form durch einen unterschiedlichen Durchmesser, eine unterschiedliche Oberflächengestaltung und/oder unterschiedliche Längen aufweisen.

2. Stabilisierungseinrichtung nach Anspruch 1, dadurch gekennzeichnet, daß jeder Zylinder (10, 20, 24) ein unterschiedliches Oberflächenprofil aufweist.

3. Stabilisierungseinrichtung nach Anspruch 1 oder 2,
dadurch gekennzeichnet, daß die Steuereinheit (30) in dem von den Zylindern (20, 22, 24) umgebenden Raum des Geschosses (10) angeordnet ist.

## Revendications

1. Dispositif de stabilisation pour un engin volant (10), se composant de plusieurs cylindres (20, 22, 24), chacun pouvant tourner autour d'un axe et être ajusté dans sa position, caractérisé en ce que quatre cylindres (20, 22, 24) tournants sont répartis à distance identique des uns des autres sur le périmètre d'un projectile (10), et sont disposés individuellement, avec leurs axes situés sur une face supposée du projectile qui est radiale, de manière à être réglé au calibre du projectile (10) et hors de ce calibre, au moyen d'un module de commande (30) disposé dans le projectile (10), et présentent entre eux une forme différente du fait d'un diamètre différent, d'une configuration de surface différente et/ou de longueurs différentes.

2. Dispositif de stabilisation selon la revendication 1, caractérisé en ce que chaque cylindre (10, 20, 24) présente un profil de surface différent.

3. Dispositif de stabilisation selon la revendication 1 ou 2, caractérisé en ce que le module de commande (30) est disposé dans l'espace du projectile (10) entouré par les cylindres (20, 22, 24).

## Claims

1. Stabilisation apparatus for a missile (10), comprising a number of cylinders (20, 22, 24) each rotatable about an axis and positionally adjustable, characterised by the fact that four rotatable cylinders (20, 22, 24) are distributed at even spacings apart around the periphery of a projectile (10) and are arranged to be individually adjustable through their median axes on a radial imaginary projectile surface into and out of the calibre diameter of the projectile (10) and differ from one another in shape as a result of different diameters, differently designed surfaces and/or different lengths.

2. Stabilisation apparatus in accordance with Claim 1, characterised by the fact that each cylinder (10, 20, 24) has a different surface profile.

3. Stabilisation apparatus in accordance with Claim 1 or 2, characterised by the fact that the control unit (30) is positioned in a space in the projectile (10) which is surrounded by the cylinders (20, 22, 24).

FIG.1

FIG.2

FIG.3